Europäisches Patentamt

European Patent Office

Office européen des brevets

(19)

(11) Publication number: **0 140 500**

**A2**

(12)

# EUROPEAN PATENT APPLICATION

(21) Application number: **84305492.5**

(22) Date of filing: **13.08.84**

(51) Int. Cl.⁴: **H 01 L 31/02**
**H 01 L 25/04**

(30) Priority: **26.08.83 US 527164**

(43) Date of publication of application:
**08.05.85 Bulletin 85/19**

(84) Designated Contracting States:
**BE CH DE FR GB IT LI LU NL SE**

(71) Applicant: **Headrick, Richard Throop**
**5200 Irvine Boulevard Space 24**
**Irvine California 92714(US)**

(72) Inventor: **Headrick, Richard Throop**
**5200 Irvine Boulevard Space 24**
**Irvine California 92714(US)**

(74) Representative: **Hands, Horace Geoffrey et al,**
**GEORGE FUERY & CO Whitehall Chambers 23 Colmore**
**Row**
**Birmingham B3 2BL(GB)**

(54) Improved solar generator mounting structure.

(57) A solar generator support structure for housing standard photovoltaic panels is disclosed. The solar panels are housed in flat planes (bays and courses) which include a plurality of parallel, symmetrically faceted and stepped areas that are a maximum at the base and over the center of the support structure and which planes define a dome-shaped segment called a hemidome. The flat planes face upwardly at a compromise sun angle, and those planes are driven, either by single or double axis tracking, so that they follow the sun's movements.

FIG. 1

# IMPROVED SOLAR GENERATOR MOUNTING STRUCTURE

## BACKGROUND OF THE INVENTION

### 1. Origin of the Invention

This invention was originated by a sole inventor in response to a perceived need for improvements in the field of solar energy generation.

### 2. Field of the Invention

This invention relates to an improved mounting and support structure for housing state-of-the-art solar, or photovoltaic ("PV"), panels. In particular it relates to a segment of a dome-shaped support (which I sometimes herein call a hemidome) that has flat upwardly-facing PV panels positioned at a compromise sun angle. Rotation of the support in one axis about the vertical center of the hemidome, so it follows the sun's movement, yields high efficiency in solar energy generation.

### 3. Background Discussion

Harnessing the sun's rays by using solar cells to generate electrical power is today well known. A summary of several known photovoltaic facilities is published in the April 1982 Volume 2, No. 2 of ARCO Solar News. As there described billboard-like arrays are common to the prior art.

One key to efficiency is to achieve maximum "packing density" at lowest acreage cost with minimum transmission facilities and line distance being required. In an effort to achieve that goal various mounting techniques have been utilized with varying degrees of success. These mounting techniques include fixed position mounts or moveable mounts which provide controlled movement in one or two axes with calendar correction for the sun's apparent movement during the seasons when viewed from a fixed and given point on earth.

In the prior art, a fixed mounting is cheapest, but it is least efficient at absorbing sunlight. The moveable mounting techniques increase solar efficiency but do so only by paying the price of more costly and sophisticated rotatable structures and solar tracking systems. Prevention from wind damage must be made in either type of prior art mounting structure.

Turning first to a fixed position billboard type of array, the above-noted reference discusses homes that mount conventional PV panels on the roof of the home. These panels can be secured very firmly. Once secured they will resist most wind damage. Being fixed in place, however, their efficiency in capturing solar energy is far lower than moveable structures.

A pyramid shape is considered as a fixed structure in the prior art. The east, south and west sides of the pyramid are sloped up at the proper angle. This also, however, has definite limits in efficiency. One problem with the pyramid configuration, for example, is that it has three efficiency peaks. It is thus erratic in the power it generates. One peak is towards the east in the morning, another is toward the west until sunset, and in between, a third peak (probably representing something in the order of two thirds of its total energy output) is when the south facing side of the pyramid catches most of the sunlight. In between each of these energy peaks is a sharp drop-off in energy output. The energy output is minimum at both 45° azimuth angles, but additionally has associated lowered energy efficiencies in the proximity of these azimuth angles.

If the entire pyramid were capable of rotating to follow the sun-azimuth, it would be more efficient. In such event the east and west sides of such a rotating structure would not serve much purpose other than accumulation of ambient light and their contribution to its overall structural integrity. Rotation of such a pyramid structure to follow the movement of the sun, however, would entail a highly impractical mechanical/electrical system.

The pyramid structure can resist most winds. Even though fixed and rigid, the solar cell panels can be torn loose if strong winds come from just the wrong direction. Any attempt to make mechanical provision for moving PV panels into a safe position in high winds would be very difficult. This difficulty represents another disadvantage of the pyramid proposal.

Other prior art disclosed in the above-cited reference includes moveable flat panel arrays. For example, at the demonstration facility near Hesperia, California, sixty (60) kilowatts per acre is being produced by ARCO-Solar, Inc., in cooperation with Southern California Edison.

The Hesperia arrays are rectangular in shape so that they may be readily assembled using unit groupings already mass manufactured by ARCO-Solar, Inc. and others. Because of shadowing, only six towers may be

0140500

-4-

located on one acre. Each tower yields a maximum wattage of about 10,000 watts per 1,000 square feet of array (10 KW), thus producing 60 KW per acre.

Packing density for installations similar to that of Hesperia is not a problem when the installation is made in a location sufficiently remote that the real estate is available at low cost. The remoteness, however, demands increased costly transmission facilities and the line distances pose power losses. Thus, there is a balance between being able to produce the electricity and being able to transmit it to more densely populated areas without prohibitive line costs.

SUMMARY OF THE INVENTION

My invention provides a segment of a dome-shaped support structure - a hemidome - which comprises a central truss starting at the base and extending radially over the apex of the hemidome's segment. On each side of the central truss I provide a plurality of parallel, symmetrically faceted and stepped flat planes which diminish in areas toward the top of the hemidome and toward the outer edges of the hemidome's diameter. Flat PV panels are housed at those planes.

The flat planes of my support face upwardly at a compromise sun angle. Beyond the apex of the hemidome I have arranged an additional upstanding row of flat planes for housing additional PV areas and thus increasing efficiency. My support preferably employs single axis tracking by rotating about the hemidome's vertical axis at its apex to follow the sun's movements.

I have discovered a design criteria that I closely adhere to. I guard against shadows from one PV array falling across the solar face of adjacent arrays. Such "shadowing," as it is known, makes the conventional billboard-like arrays inefficient in space utilization. As a representative example, "shadowing" prevents more than about six 1000 square foot arrays per acre.

An acre has over 43,500 square feet. The 6,000 square feet of a billboard-type array is roughly 13% of an acre. To increase efficiency it is known to use double axis tracking which permits continual orientation of the solar arrays toward the sun's position. The tracking takes place throughout the day and takes into account the seasonal changes of the sun's position on a day-by-day basis. Double axis tracking is well known. Such tracking is controlled either by a computer or sometimes by optical means. Since the billboards are mounted on a rocker which in turn sits on a single rotatable post it is a simple structure to control. Installation is relatively simple and the cost of the tracking pedestal is relatively low and capable of mass-production.

The Hesperia system is highly sophisticated in that it has such double axis tracking, which is computer controlled. Additionally, the Hesperia system has the capability of the entire array being "slewed" horizontally in case of a high wind.

I have discovered from an in-depth review of computer analysis of sun-angles that at 36° N. Lat., a 50° up angle above the horizon is a very efficient compromise. The compromise sun angle - under circumstances I describe in my invention, diminishes the need for double axis tracking. While I do not exclude double-axis tracking from my invention, I have achieved a very high degree of solar efficiency by single axis tracking. In either event, however, my invention spaces the individual arrays in a novel configuration which minimizes the chances of shadows falling on other arrays.

The present invention provides a moveable array that has the capability of either single or double axis tracking. The support structure is shaped as essentially one-half of a dome which has symmetrically faceted and stepped flat faces in parallel planes. These faces diminish in area from the middle of the hemidome in two dimensions, e.g., toward the outer edges of the hemidome's diameter and toward and over the top of the hemidome's apex. The flat facets are tilted at the proper compromise sun elevation which is known for a given erection site. To give a representative example at 36° N. Lat., it is advantageous to face the flat panels directly at the sun's compromise position of up 50°. Although the sun's position does vary during the seasons, this sun position is a particularly meritorious compromise. My computer studies have recognized this elevation to be a high efficiency compromise for a particular latitude position. The compromise angle, of course, varies with latitude. For each degree of latitude less than 36° north, 1° of sun angle elevation is added to the 50° up angle. Thus, at 35° north, the compromise sun angle is 51° up. For each degree of latitude greater, e.g., further north, then 1° is subtracted. Accordingly at 37° north the compromise sun angle is 49°.

My support structure for the flat solar panels is referred to as a hemidome because it has a plurality of arc-like trusses that define essentially a portion of a rounded half-dome when the trusses are assembled. The support includes three major centrally located trusses. The middle truss of the three starts at the hemidome's base point and curves upwardly and over the apex, or highest point, of the dome surface. It terminates at a point located about 30° to 40° over the apex of the

hemidome, where I advantageously mount an upwardly extending extra plurality of solar panels for still further solar efficiency.

My major central truss defines a dividing line for a symmetrical group of rectangular panels that are located on either side of the major truss and which terminate at the two outside trusses of these three centrally located ones. Since these three main trusses tend to be thinner I have found it advantageous to obtain additional support strength by having the flat tangential portions of the bays at the base of the hemidome recessed within an externally exposed arc segment of these three main trusses.

Before describing the support structure further it is deemed important to note a feature of this invention that demonstrates its unique concept. Computer studies have shown that the sun's movements can be followed very accurately during each given day throughout the seasons of the year. Such a movement requires double axis tracking. Simply stated the arrays must face east at precisely the correct direction each morning and follow the sun until it sets in the west in the evening. My dome-shaped undersupport includes a series of circular rails concentrically located about the center of the hemidome's axis. Wheels located on the inside and at the bottom of my support structure carry the trusses and the arrays. A drive mechanism rotates the support structure to precisely follow the sun's path from sunup to sundown. Following sundown, the structure continues its travel on around to the precise easterly direction where it arrives on time for the next morning's sunrise. Continuous movement is considered meritorious to reversing or reciprocal motion for mechanical and control simplification.

My support structure is also highly resistant to wind damage. The rails, wheels and motor drive respond to a known high-wind indicator device by rapidly moving the hemidome support structure so that the wind blows through the open spaces of the truss supports. The flat solar array panels then present an edge to the wind and will remain securely in place with relatively little chance of wind damage.

BRIEF DESCRIPTION OF THE DRAWINGS

The features of the present invention can best be understood by reference to the following description taken in conjunction with the drawing where like numerals indicate like parts.

Referring now to the figures:

Figure 1 is a drawing showing the sun's movement.

Figure 2 is a graphic projection of the sun's movement when presented on a horizontal plane at the base location of Figure 1.

Figure 3 is a perspective view of one embodiment of my support structure.

Figure 4 is a view showing the parallel bays when viewed from an up 50° compromise sun angle.

Figure 5 is a view showing the detail of my truss supporting structure.

Figure 6 is a view taken along the plane shown as 6-6 in Figure 5, showing the close contoured proximity of the inside of the array frame to the outer surface of an inner and supporting dome-shaped structure.

Figures 7, 7A, 7B and 7C are schematic diagrams depicting a typical drive mechanism for my support structure.

Figure 8 is an illustrative mechanism for achieving double axis tracking for my support structure.

DETAILED DESCRIPTION OF THE DRAWINGS

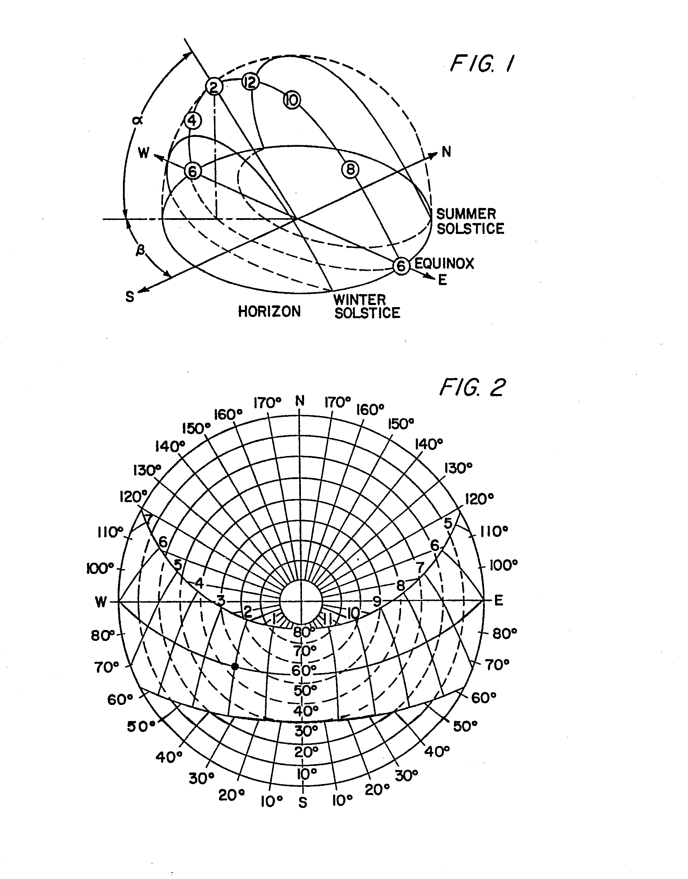

Turning now to Figure 1, some typical sun movements are depicted. Solar tables are known and available which depict very precisely the sun's exact movement for every day. The most practical of numerous tables that are available reveal what are called sun path diagrams. The explanation of such a diagram, in general, is shown by Figure 1.

Figure 1 yields a graphic presentation of the sun's movement in the sky as projected onto a horizontal plane. In Figure 1 the horizon is represented as a circle with an observation point at the center. The sun's position at any date and hour is shown in Figure 1 by its altitude α and its bearing β.

As shown in Figure 1, the hours of the day are positioned along the sun's path. In the northern hemisphere, the sun's arc is the highest overhead in the summer and is the lowest overhead in the winter. The highest and lowest arcs are called the summer solstice and the winter solstice. The average, or median, in between both curves is called the equinox. These three arcs are depicted and labeled in Figure 1.

Table I shows the equinox elevation between sunup and sundown. The sun's hourly positions for Table I are depicted in circles in Figure 1.

TABLE 1

| 6.00 A.M. | 8:00 | 10:00 | 12:00 | 2:00 | 4:00 | 6:00 P.M. |
|---|---|---|---|---|---|---|
| EAST 90° | 72°E | 44°E | SOUTH | 44°W | 72°W | WEST 90° |

In Figure 1 a vertical line is drawn from 2:00 P.M. to the point where it intersects the horizontal plane. That vertical line defines α and β as shown in Figure 1. For the sun path diagram of Table 1, Figure 2 shows that a series of concentric evenly spaced circles are used to depict altitude with each circle being 10° in altitude or elevation. The bearing angle, , of the sun at 2:00 P.M. is located by dividing the horizontal plane by a series of evenly spaced radii. In this example the vertical line of Figure 1 intersects at about 44° west. That intersection is shown as a solid dot in Figure 2. This 44° west position available from Figure 2 is reflected in Table I at 2:00 P.M..

I have studied computerized tables for the sun's movement in sun path diagrams as shown in Figure 2. The sun path diagrams, of course, vary for each latitude position. Figure 2 depicts the sun path diagram for 36°N latitude. At every latitude position a highly efficient compromise sun angle is available. For example, in the 36°N latitude example a compromise sun position is a 50° up angle above the horizon.

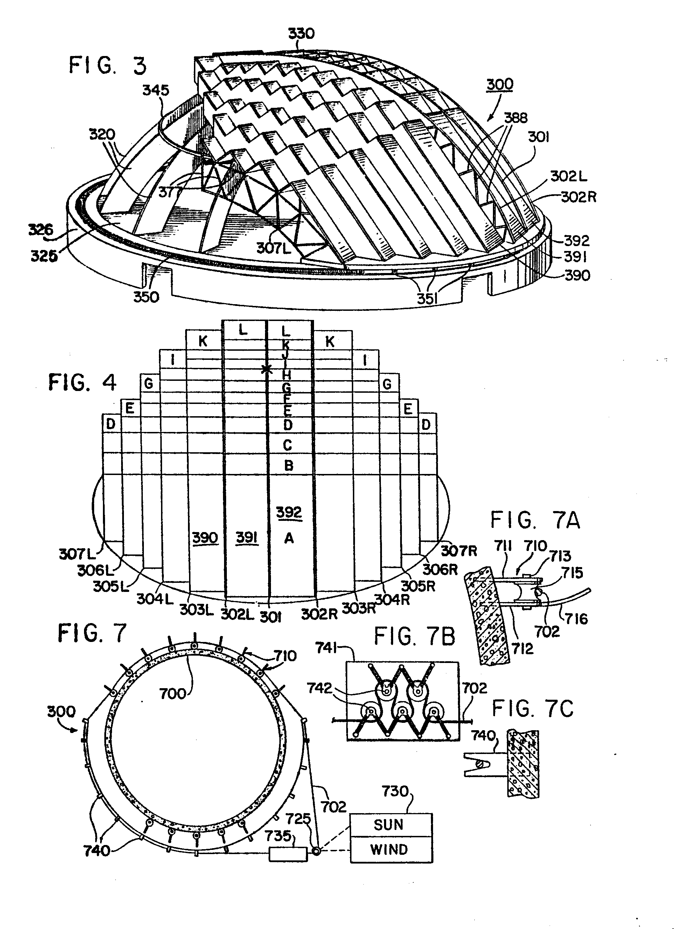

Based upon the above-noted observation, I have designed my mounting structure to have, in one embodiment, a constant 50° up, or altitude, angle for single axis rotation about the highest point of my segmented dome structure. A single axis of rotation is highly preferable since it may be simply implemented. As shown by the perspective of Figure 3, all of my rectangular solar panels face up at a constant angle of 50° from the horizon (that angle is proper for 36°N latitude).

Figure 3 in perspective shows, at the left-hand side, a series of spaced radial arches 320 that start at the base 325 and join together at the apex 330 (not visible in Figure 3). The radial arches 320 support an intermediate circular track 345. Wheels mounted on the inside of my solar array structure 300 ride on track 345.

The main load-bearing rail system includes tracks 350 and wheels 351 which are located at the periphery of base 325 as shown in Figure 3. This structure may either be at ground level or it may be elevated and supported at the top of the wall 326 also as there depicted. The elevated wall 326 provides unimpeded entrance and exit regardless of the location of the space frame 300.

A load-bearing pivot may also be provided at the apex of the dome-shaped arches 320 and is matched at the inner surface of the array frame 300. This pivot is preferably a "slip-plate" as used for bridge construction. These comprise two ground flat plates of heavy steel, heavily teflon coated and with additional provision for occasional lubrication from a remote, ground level, location. The purpose is to accommodate any misalignments in the track systems 345 and 350 without causing binding at the pivot point. A screw-jack mechanism permits adjustment of the lower plate to carry a predetermined portion of the space frame load.

It should be noted that the radial arches 320 shown in Figure 3 may, instead, be a dome monolithically constructed of concrete. If the latter is the case, the enclosure thus defined may be utilized to shelter the technical equipment involved in power storage, conversion from D.C. to A.C. and metering to the utility grid. Also, the space within a concrete dome may serve a totally separate purpose such as a warehouse, airplane hangar, grain elevator, auditorium, etc.

My solar array structure 300 is rotatably driven to follow the sun from morning to evening. The drive system may be any conventional system. A preferred drive system, however, will be described in more detail later in connection with Figures 7 through 7C.

Figure 3 is only a partial perspective. Only the truss 307L for supporting the solar array panels at the left-most edge of array 300 is shown in full detail. Truss 307L has a series of straight tubular braces 377, which braces may advantageously be rectangular in cross-section. Obviously any suitable brace material, whether round or angular, could suffice for my braces. The straight brace sections 377 are mitered and are connected together by brackets, bolts, welding or the like (not shown).

Another truss 302L is shown in partial detail. Again straight brace sections 388 are formed into rigid triangles to form this brace. Because my support structure is a hemidome the three main braces 301, 302L and 302R are thinnest in the radial direction toward arches 320, due to their location being essentially tangential to those arches 320.

For added strength and rigidity I have extended the arc of these three trusses 301, 302L and 302R above the support surfaces that house the flat solar panels shown as, for example, 390, 391, 392, etc.

For purposes of illustration only assume that the perspective view of my stepped hemidome support has the dimensions stated herein. As a representative example, consider the arches 320 replaced by a thin-walled concrete dome structure that is 200 feet in diameter at its base. Such a dome will cover 31,416 square feet. The concrete shell is 67 feet high with a radius of curvature of 108 feet. The dome's external surface area is 45,465 square feet. Since one acre is 43,560 square feet, the dome's outer surface area is 104% of one acre. Using my design guidelines approximately one-half of the surface area of the dome using rectangular arrays each at a sun elevation angle of 50° is available for use as described in more detail with respect to Figure 4.

If one were at the compromise sun position and looked down on my solar array invention, it would yield the elliptical shaped area depicted in my Figure 4. Figure 4 shows what would be seen by one's eye if it were positioned at an up 50° location without any shadowing taking place on the PV panels. For simplicity purposes in Figure 4 only the solar panels without any undersupports are depicted.

Figure 4 thus represents the nonshadowed area that would receive sunlight from sunup to sundown because my support structure is designed to rotate about a vertical drawn through the high point of my hemidome. It is important to understand from my Figure 4 that a dome covering about three-quarters of an acre at its base 325, Figure 3, exposes, in my hemidome 300, over 20,956 square feet of solar panel area. By reference again to the example in Hesperia I have achieved a space efficiency by my solar array structure of essentially 48% as compared to approximately 13% of the prior art for a factor of improvement of approximately 4.

Figure 4 shows the total exposed aperture of solar area that is workable from sunup to sundown. Quite obviously, during the early morning at dawn there will be some shadowing of some of the surfaces near the top and the oversurface portion of the dome. However, even that shadowing diminishes rapidly as the sun rises above the horizon. The lowest tangential "course" near the base and facing the sun represents approximately 45% of the entire array aperture. The loss due to shadowing at 8:30 A.M. is approximately 5% and at 10:00 A.M. is zero.

The solar area of Figure 4 is symmetrical about my main truss 301 which divides the hemidome into a right and left-hand portion. Each truss, shown vertically in Figure 4, is assigned a truss number such as 301R, 302R, etc. The trusses step down lower and lower until at the base edge of the hemidome it becomes unfeasible to construct additional solar support areas.

The horizontal lines in Figure 4 depict the upper edges of the planes for housing flat solar panels. Each horizontal row of panels is assigned a letter from A through L. I call these horizontal rows "courses." The solar panels are positioned in the rectangular course areas. The primary area for solar collection is course A. This area catches a majority of the sun's rays at all times. Above horizontal course A the solar panel areas become smaller as the apex of the dome support is approached. The center point of my dome support is marked with an X at the row location shown by the upper edge of course H, where it intersects my main truss 301.

I have selected each of my areas to accept solar panels that are produced by mass production techniques. While some slight adjustments in truss dimensions, which will be described, are necessary, the panels all contained in this example, have an up 50° compromise sun angle. I have achieved essentially the maximum possible solar panel area by my support structure in comparison to the prior art.

On the downhill side beyond the apex of the hemidome, Figure 3, the panel area, when viewed from a 50° compromise sun angle, has diminished to the point that only negligible exposure would occur if the shape of the courses were to continue the geometry that has been described. I have taken advantage of this fact by extending upwardly an extra high course L at the termination side of the hemidome. I obtain added area efficiency at that course L.

For ease of description assume that an inner concrete dome of the above-described dimensions is in place at 36°N latitude. Pipe rails or other guides are appropriately supported on struts positioned in the inner concrete dome's outer surface. It is important to have clearance between the outer surface of the inner concrete dome and the inner surface of my hemidome space frame. The clearance is needed to vent any tendency of pressure to be built up under the solar panels during strong winds that are less than a critical amount.

In my preferred design I have established an upper wind limit of 50 MPH at which time the entire space frame will be slewed (at a rapid rate) to a position perpendicular to the wind position. In the slewed position the PV arrays present only an edge into the wind. The procedure for implementing such slewing is conventional and need not be described in more detail at this point.

In order to design the stepped areas that support the flat PV arrays, certain design parameters are needed. Optically the sun angle is chosen at 50° as described earlier. Structurally the design parameter is to provide the largest possible flat rectangular surfaces for the PV arrays while remaining within a reasonable structural thickness of the space frame support members. The main center truss 301, Figure 3, is a critical truss because any flat surfaces attached to that truss and to trusses 302R and 302L are tangent to a clearance space that is uniform around the outer surface of the inner concrete dome. The three center trusses 301, 302R and 302L are thus thinnest due to the tangential design of their array panels. Since the largest PV panels are housed at the base of the space frame, they are subjected to the largest wind pressure. Accordingly, a portion of these three trusses 301, 302R

-16-

and 302L are externally protruded beyond their PV surfaces. Beyond these three, however, the design compromise for adjoining PV panel support is a balance between the truss thickness and the width of the PV arrays.

For my preferred embodiment I have found dimensions shown in Table II to be an optimum and practical compromise. The dimensions for my representative example are shown in Figure 5. These dimensions were found highly advantageous. Table II reflects the area of the PV arrays at the described locations shown in Figure 5. The values in Table II are self-explanatory when compared with Figure 5.

-17-

## TABLE II
### CHART OF PHOTOVOLTAIC ARRAY DIMENSIONS AND AREAS
(Areas are doubled to take care of right and left)

| Course | Bay 301/302 | Bay 302/303 | Bay 303/304 | Bay 304/305 | Bay 305/306 | Bay 306/307 |
|---|---|---|---|---|---|---|
| A | 24 x 64 (2 ea.) | 20 x 62 (2 ea.) | 14 x 56 (2 ea.) | 10 x 49 (2 ea.) | 10 x 42 (2 ea.) | 10 x 35 (2 ea.) |
| Area (sq. ft) | 3072 | 2480 | 1568 | 980 | 840 | 700 |
| B | 24 x 13 | 20 x 13 | 14 x 13 | 10 x 13 | 10 x 13 | 10 x 13 |
| Area (sq. ft) | 624 | 520 | 364 | 260 | 260 | 260 |
| C | 24 x 10 | 20 x 10 | 14 x 10 | 10 x 10 | 10 x 10 | 10 x 10 |
| Area (sq. ft) | 480 | 400 | 280 | 200 | 200 | 200 |
| D | 24 x 8 | 20 x 8 | 14 x 8 | 10 x 8 | 10 x 8 | 10 x 10 |
| Area (sq. ft) | 384 | 320 | 224 | 160 | 160 | 200 |
| E | 24 x 7 | 20 x 7 | 14 x 7 | 10 x 7 | 10 x 10 | ------- |
| Area (sq. ft) | 336 | 280 | 196 | 140 | 200 | |
| F | 24 x 6 | 20 x 6 | 14 x 6 | 10 x 6 | ------- | ------- |
| Area (sq. ft) | 288 | 240 | 168 | 120 | | |
| G | 24 x 6 | 20 x 6 | 14 x 6 | 10 x 10 | ------- | ------- |
| Area (sq. ft) | 288 | 240 | 168 | 200 | | |
| H | 24 x 6 | 20 x 6 | 14 x 6 | ------- | ------- | ------- |
| Area (sq. ft) | 288 | 240 | 168 | | | |
| I | 24 x 5 | 20 x 5 | 14 x 10 | ------- | ------- | ------- |
| Area (sq. ft) | 240 | 200 | 280 | | | |
| J | 24 x 5 | 20 x 5 | ------- | ------- | ------- | ------- |
| Area (sq. ft) | 240 | 200 | | | | |
| K | 24 x 5 | 20 x 10 | ------- | ------- | ------- | ------- |
| Area (sq. ft) | 240 | 400 | | | | |
| L | 24 x 10 | ------- | ------- | ------- | ------- | ------- |
| Area (sq. ft) | 480 | | | | | |
| TOTALS (AREA IN SQ. FT) | 6960 | 5520 | 3416 | 2060 | 1680 | 1360 |

GRAND TOTAL: 20,996 square feet, yielding approximately 231 KW peak power.

A determination of the design of the entire space frame starts with the design of the main center truss 301. A step-by-step procedure is involved. In my procedure, I used the primary design steps described hereinafter. Other more detailed subsidiary steps will also be described later on.

Generally speaking my primary design steps are:

(A) Draw the clearance arc. This arc is spaced away from the inner dome's outer concrete surface and is also the inner dimension of the space frame 300.

(B) Establish a "deck-plane" of the platform or moving foundation that acts as the base 325, Figure 3, for the space frame 300. This deck-plane may be either at ground level or may be on top of a supporting wall of any desired height.

(C) Tangentially slant a straight line against the clearance circle. A perpendicular to that slanted line is located at the compromise sun angle (50° up).

(D) Note where this tangential line intersects the deck-plane. The intersection plus about one foot additional radial distance establishes the outer edge of the main center truss 301.

(E) Draw a second line parallel to the tangential line spaced at a one-foot distance therefrom. This one foot is to allow for the thickness of the PV panels, trusses and the like.

(F) Draw an arc through this point. The arc center is located at the center of the inner dome's radius of curvature.

(G) Where the second parallel line of step (E) intercepts the arc of step (F), the primary array plane terminates. From this terminating point draw a line aimed at the compromise sun angle to the inner and outer arcs. This line is now termed a "shadow line" meaning that if the sun is precisely at 50° up, then the plane, so represented, would not cast any shadow on the next adjacent course.

(H) Draw double parallel lines spaced one foot apart to represent the installed plane of the PV array parallel to the primary tangential array until the outer of the parallel line intercepts the outer arc of the truss.

(I) Repeat the process to define a series of stair steps, the riser of which is the shadow line and the tread of which is the subsequent PV array. Note that the subsequent PV array is always facing perpendicular to the sun line. It should be noted from Figure 3 that the "treads" become progressively narrower toward the edges of the hemidome's diameter until a point is reached where it is not structurally economical to provide any further courses. As a practical matter, I restricted this narrowest dimension to five feet, which is suitable for housing a standard PV panel assembly for my space frame structure 300.

(J) Finally, add a final upstanding course, the scope of which is not going to cast any shadow since it is the last course. I give it a thread width of ten feet as shown by Table II and the dimension of Figure 5.

The steps of (A) through (J) defined courses A through L, Figure 4, as positioned on either side of the main truss 301, Figure 4. Now I will define my method for designing the remaining courses for the progressively smaller bays toward the sides of the hemidome. The bays subsequently designed become narrower for practical purposes to achieve the balance between truss thickness and PV array width.

Each bay starts with a substantial tangential array commencing at the deck line (see steps (A) through (D)) and extending upward to a plane representing the shadow line. In Figure 4 these planes are shown as horizontal lines between courses A through L. Note in Figure 4 that the deck plane of the hemidome forces the PV arrays to be foreshortened. The foreshortening is into the plane of the deck as shown in my Figure 4.

Now the width of the bays need to be discussed. In my invention I have selected bay width values depicted in Figure 5, starting the bay widths with 24 feet for bay 301/302L; 20 feet for bay 302L/303L; 14 feet for bay 303L/304L and 10 feet each for the three remaining bays, 304L/305L, 305L/306L and 306L/307L.

As shown in Figure 4 each course (shown as a horizontal row) is in reality defined by the edges of two planes located at the shadow line. Figure 5 shows that the longitudinal depth of the "treads" of the PV arrays is the same throughout a course. The courses from the middle ones outward in both the right and left-hand directions have a constant longitudinal depth throughout each given course. Reference to Table II shows that the terminating PV array in bay 302L/303L is at course K, in bay 303L/304L at course I, in bay 304L/ 305L at course G, in bay 305L/306L at course E and in bay 306L/307L at course D. I call this group of upstanding PV array locations a terminating course. The areas that they add to my total solar aperture are shown at their respective locations in Table II.

It is important to note that the total elliptical picture of the space frame array area, Figure 4, when viewed from a compromise 50° sun angle is a solid contiguous grouping of rectangular PV arrays. This fact allowed me to optimize the square footage available for energy production on my dome-like space frame structure 300. The projected elliptical view of the inner concrete dome shown by dashed lines is almost 95% covered by the PV array.

Figure 5 depicts a perspective view of the left-hand portion of Figures 3 and 4. Figure 5 repeats the dimensions of Table II. The shaded areas reflect the flat locations where solar panel arrays are located. The arrays are not depicted in Figure 5 for clarity purposes. The straight lines of Figure 5 form the truss design which is assembled in accordance with my method described above.

. In Figure 5 I have not depicted the cross-supports at the upper edge of each course, again for clarity purposes. Plane 6-6 is shown located at the upper edge or "tread" of course A. At each upper edge and at intervals as necessary cross-supports are used for bracing and rigidizing my space frame.

Figure 6 shows a plan view of the plane 6-6 of Figure 5. As shown in Figure 6 the cross members will serve the dual purpose of joining the various trusses while at the same time form a curved section that follows, for example, the outer dome surface of an inner concrete dome. In Figure 6 a cross-section of the concrete dome shell is depicted. The space between the outer surface 601 and the adjacent struts such as 603, 604, etc., of the space frame is necessary to accommodate the pipe rail 345, Figure 3, and the wheels upon which the space frame will ride. Additionally, the space will permit wind to pass beneath the PV array panels so that pressure does not build up under the PV panels. Extra locking wheels are provided on pipe rail 345 to prevent lifting of the entire assembly off the intermediate guide rails on the dome in a high wind. These locking wheels contact the rail 345 somewhat under its outer edge in a manner highly perfected in the "Matterhorn" roller coaster ride at Disneyland.

Figures 5 and 6 are self-explanatory in depicting the manner in which each cross-strut connects and supports the adjacent bays for PV arrays. The PV arrays are shown cross-hatched in Figure 6. The cross-hatched sections are the flat solar PV surfaces which are clearly depicted in Figure 3. Conventional electrical connections connect all of the arrays together for either direct current or with the use of existing devices, alternating current. Since such conventional techniques are well known they need not be described further. Reference may be made if desired to the above-noted ARCO-Solar news release. ARCO-Solar, Inc. and other similar companies have ample literature available upon request which describe in detail the solar power conversion, computer control tracking systems, optical controls, etc.

As described earlier, my invention preferably rotates about a single axis with my solar PV arrays fixed upwardly at a compromise sun angle. A drive system for that preferred embodiment is depicted in schematic form in Figure 7, which is a cross-sectional plan view that depicts the base of the inner concrete dome 700. That dome 700 is stationary and has at its periphery a series of cable retaining arms and idler pulleys 710. A typical pulley which would be mounted around the periphery of the base of the dome 700 is shown in Figure 7A as idler unit 710. Each idler unit includes a pair of supports 711, 712 which are embedded at one end into the concrete and at the other end have an axle 713 for housing an idler wheel or pulley 715.

A cable retaining arm 716 keeps the cable from dropping away from the pulleys 715 and also insures that the cable 702 does not drape away from its guided location.

In Figure 7 the capstan drive 725 is located remote from the dome 700 and the space frame support structure 300. Cable 702 wraps around the capstan 725 for a given number of turns to supply traction in a conventional winch manner. Capstan drive 725 is turned at a desired rotational speed that is dependent upon the size of the dome, the space frame support, and the mode of operation. Two different motor-driven speeds by motor drive 730 is advantageous. One motor speed drives the space support frame at approximately six inches per minute of cable travel. This slow movement allows the sun to be followed by the space support frame structure. The second motor speed is employed to quickly slew the space frame into a right angle position to wind direction and overrides the drive ratio of the first motor speed. In that right angle position, the wind blows through the truss structure and will not damage the PV arrays.

The sun-following movement is first described in more detail. Using the example of a 200-foot diameter for the outer surface of the concrete dome at its base, the rate of rotational movement may be readily calculated. Assuming that the diameter of the space frame structure is 224 feet, that diameter multiplied by π multiplied by 12 inches converts to almost 8,450 inches. The total number of inches divided by 24 hours, and divided further by 60 minutes/per/hour, yields approximately six inches per minute of required cable travel. In well known fashion this cable movement is related to the diameter of the capstan so that precisely controlled gear train ratios for the motor driving the capstan are readily selected. Such selection, gears, motors and the like are well known and need no further description. Suffice it to say that the above-stated calculation shows clearly that the movement to follow the sun is positively controlled. At the Hesperia location, computer controls accomplish exactly that function and are well within the ordinary skill of the art.

In the schematic diagram of Figure 7, the motor 730 is shown simply as having two drive options, "sun" and "wind." Before describing the wind movement, the forks 740 shown in Figure 7C need some explanation. These forks 740 are located at spaced intervals along the base of the space frame support. The projections in Figure 7 represent these forks 740. The forks 740 grip the cable 702 securely enough to yield positive rotational force. Thus they provide resistance to prevent cable 702 from sliding and yet will release cable 702 when it peels tangentially away from the space frame to return to capstan drive 725.

On the slack side of capstan 725 is a slack tensioning device 735. Figure 7B gives a schematic view of the details for slack removal via a series of spring-mounted pulleys which are securely fastened at one end within housing 741. Each pulley rotates within a yoke 742. Connected to the U-shaped yokes 742 are heavy coiled springs which are in tension so that the cable 702 is held taut as it passes over the pulley mounted via yokes 742.

The pulleys obviously remove any slack in cable 702. The combination as just described provides a predetermined amount of cable tension on the pickup and release sides of captstan 725.

A wind annemometer 351 (not shown) is suitably mounted on the space frame 300. The annemometer detects and emits electrical signals indicative of the wind velocity and direction. After a predetermined high amount of wind has been detected for a time sufficient to guard against unwarranted movement due to wind gusts, the computer receiving the signals slews the space frame to a safe position. Once the wind has dropped below the critical velocity for a predetermined time, then the space frame is returned at the higher wind rotational speed to its correct position.

Positioning the space frame properly is simplified by a series of position signal transmitters and receivers indicative of the six minute intervals at the periphery of the space frame. The computer has stored within its memory the sun location at a given clock time. Thus the space frame must face that direction in attitude at the proper time. When the computer receives the position signals from the space frame and confirms a time match within the computer the motor drive is removed from the "wind" speed and returns to its "sun" speed. From that point on the space frame is rotated to follow the sun's movement. Such a system with computer controlled clocks and wind speed drive is well within the skill of the art and does not require further description.

A series of computer studies, Appendix A, attached, are summarized in Table III. This summary Table III has computed the added efficiency that would be yielded if double axis tracking were employed. As shown by the summary double axis tracking with calendar correction has been computed as the most efficient system and is accorded 100%.

### TABLE III
### ANNUAL ENERGY OUTPUT

| Fixed Position Due South Compromise Sun Angle | Single Axis Tracking At Compromise Sun Angle | Double Axis Tracking |
|---|---|---|
| 325,446 KW-HRS. (70% Efficient) | 449,561 KW-HRS. (96.7% Efficient) | 464,809 KW-HRS. (100% Efficient) |

In each instance comparable circumstances applied for the computer simulation study of Appendix A. The panels were a model known as M51-39 from ARCO-Solar, Inc. Thirty-two PV modules were connected in series and 141 PV modules were connected in parallel in all instances. The total number of PV modules were 4512 and yielded 18,048 square feet of efficient net aperture area. A location at Bakersfield, California, which is 36°N latitude, was chosen as a site location for the computer study. Three system configurations were assumed, with each system having as a further assumption, full access to the sun over a full solar day with no shadows. The representative printout reveals average daily output by the hour for each month.

The three systems involved are shown in the headings of Table III. The yearly total is shown for each system. By using the double axis system as a 100% reference, the single axis system is 96.7% efficient in comparison, whereas the fixed panel facing up at 50° and always pointing due south is 70% efficient.

I will now describe the mechanisms which my invention employs in achieving double axis tracking capability. While it is somewhat more efficient than my preferred embodiment (3.3%), the added complexity when weighed against the increased efficiency may in some circumstances justify the cost of increased hardware. The computer study indicates an annual theoretical advantage, in favor of double axis, of 15,248 KW-HRS between the single and double axis tracking. 15,248 KW-HRS per year represents, particularly in some areas, a sizeable electrical cost. It should be the customer's option taking all circumstances into consideration as to the possible use and cost-effectiveness of double axis tracking.

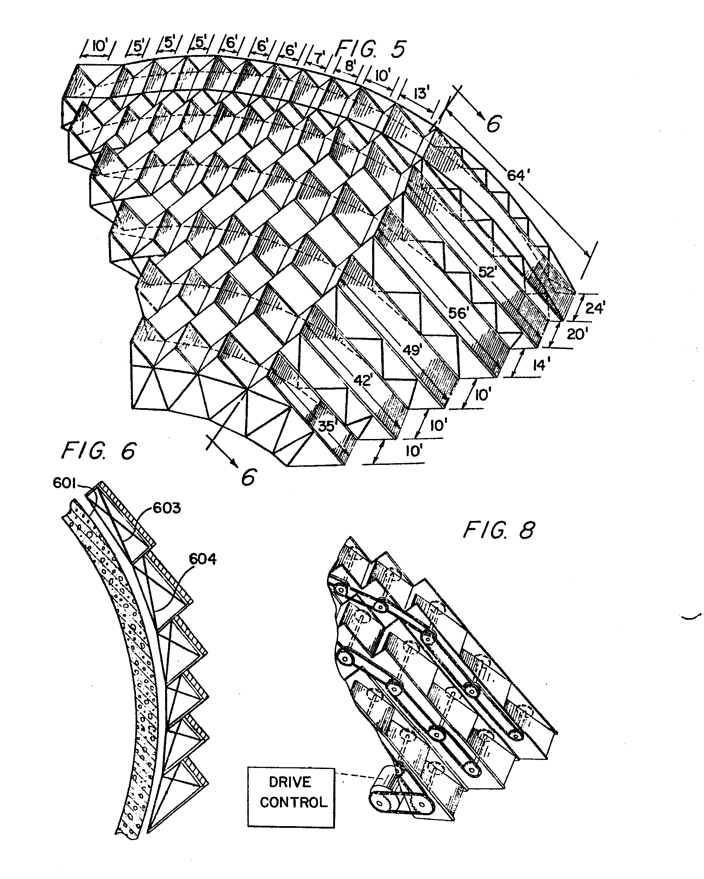

Figure 8 depicts in highly schematic fashion a way of moving the PV panels so that they tilt toward the sun as the sun moves. As shown in Figure 8, each lower tangential course is broken up into venetian blind-like segments. Dual sprockets are fastened on an axis which spans across the venetian blind-like panels. A chain drive connects adjacent panel segments to each other so that any panel that moves in response to an interconnecting sprocket will reflect similar movement in all of the panel segments in that one bay.

Either a computer control or an optical tracking system, well known to the art, will cause adjustment of the panel segments to follow the sun's movement in elevation. The technology to accomplish the elevation tracking of the sun is well known and need not be explained. Many typical installations are available which have the venetian blind-like arrangement of my Figure 8.

I have herein described with respect to Figure 8 a means for achieving double axis tracking for all of the flat PV panels of my total solar array. It should be understood that since the majority of the solar rays are captured by course A next to the hemidome's base, it may be more desirable and expedient to make only that one course capable of double axis tracking. In any event, however, I have clearly described in my invention that I prefer single axis tracking for the support structure of my invention.

The above description presents the best mode contemplated in carrying out the present invention. This invention is, however, susceptible to modifications and alternate constructions from the embodiments shown in the drawings and described above. Consequently, it is not the intention to limit the invention to the particular embodiments disclosed. On the contrary, the invention is to cover all modifications, sizes and alternate constructions falling within the spirit and scope of the invention as expressed in the appended claims.

CLAIMS

1. A structure for mounting essentially flat solar cell panels, comprising:

a stepped dome support segment having flat upwardly facing surfaces for housing at least one, and preferably a plurality, of said flat solar cell panels; and

means for rotating said dome segment support structure about a vertical axis at the dome's apex so that its flat solar panels follow the sun's movements.

2. A structure in accordance with Claim 1 wherein the stepped faces are fixed at a predetermined angular amount related to a compromise sun angle position.

3. A structure in accordance with Claim 2 wherein the predetermined amount is a compromise sun angle selected to catch a high amount of the sun's rays for the particular location of the support structure.

4. A structure in accordance with Claim 1 comprising a series of parallel trusses starting at the dome segment's base and curving upward toward the dome segment's apex.

5. A structure in accordance with Claim 4 wherein the trusses define flat parallel planes having areas diminishing in two directions to conform to the dome segment's shape, and means for rotating the parallel plane in a second axis to further follow the sun's movement.

6. A single axis tracking solar generator structure comprising:

a substantially dome-shaped inner support;

an outer dome-shaped segment spaced from and rotatable about the vertical axis located at the inner dome support; and

a plurality of flat faceted bay and course planes on the outer surface of said outer dome for housing photovoltaic arrays.

7. A solar generator in accordance with Claim 6 and wherein said segment further comprises:

a substantially hemidome configuration having a main central flat, faceted and stepped portion starting at the base and extending over the apex of the hemidome; and

stepped flat bays symmetrically located on both sides of the central portion towards the edges of a diameter located at the base of the hemidome.

8. A solar generator in accordance with Claim 6 wherein:

said dome-shaped inner support is a thin-walled concrete dome providing useable space therein.

9. A solar generator in accordance with Claim 7 and further comprising:

means for rotating the outer hemidome to follow the sun's movement.

10. A solar generator in accordance with Claim 9 and further comprising:

a first plurality of wheels at the base of the outer hemidome and means for driving the wheels at the rate of the sun's movement.

11. A solar generator in accordance with Claim 7 and further comprising:

means for driving the outer hemidome at a faster rate to a position for minimizing the change of damage by strong winds.

12. A solar generator in accordance with Claim 9 and further comprising:

a second plurality of wheels and a track supported on the inner dome at a position intermediate of the base and the apex of the inner dome, and

a pivot point bearing for supporting a portion of the load of the hemidome located at the apex of the inner dome.

13. A solar generator in accordance with Claim 12 and further comprising:

locking wheels associated with said second plurality of wheels for securing the hemidome to said intermediate rail while permitting rotation thereof.

14. A solar generator in accordance with Claim 7 and further comprising:

an upwardly extending series of terminating upper courses at the upper extremity of each bay of the hemidome located beyond the apex and extending therefrom towards the edges of said hemidome diameter.

15. A solar generator in accordance with Claim 14 and further comprising:

planes of said flat bays and courses positioned to face upwardly at a compromise sun angle selected for the particular solar collection location.

16. A solar generator in accordance with Claim 7 and further comprising:

a first main course adjacent to said base and wherein said course is defined by a plurality of planes tangentially spaced from the outer surface of the inner dome, and said course comprising in total a majority of the aperture area for the sun's solar rays, and each plane within that course being symmetrically located from the center and diminishing in area as the planes are located away from the center and toward the outer edge of the hemidome.

17. A solar generator in accordance with Claim 16 and further comprising:

a plurality of additional courses located above said first course and each one of said plurality of courses having planes similarly configured to that defined for said first course and further defined by each course presenting diminishing areas as it is progressively located toward and over the apex of the hemidome.

18. A solar generator in accordance with Claim 14 and said terminating courses further comprising:

upwardly standing flat planes for collecting more solar rays than the diminished area of that last course would have been able to collect had it followed the dome segment's geometry as herein defined.

19. A method of forming a solar energy support structure comprising the steps of:

establishing a dome-shaped inner surface;

spacing a segment of a dome away from and coaxial with the inner dome;

facing at least one, and more preferably a plurality, of flat planes on the outer surface of the dome segment in a configuration when viewed from a compromise sun angle such that the unshadowed portions of the planes form essentially an ellipse.

-34-

20. A method in accordance with Claim 19 and further comprising the step of:

arranging a series of parallel trusses for the flat planes so that the bottom surface of one truss is available as the top surface of an adjacent truss.

21. A solar generator substantially as hereinbefore described and/or illustrated.

22. A method substantially as hereinbefore described and/or illustrated.

FIG. 1

α

W

4

2

12

10

8

N

6

SUMMER
SOLSTICE

β

S

6 EQUINOX

E

HORIZON

WINTER
SOLSTICE

FIG. 2

170° N 170° 160°

160°

150°

150°

140°

140°

130°

130°

120°

120°

120°

110°

110°

7

6

5

100°

100°

5

6

7

W

4

3

2

1

11

10

9

8

E

80°

80°

80°

70°

70°

70°

60°

60°

60°

50°

50°

50°

40°

40°

40°

30°

30°

30°

20°

20°

20°

10°

10°

10° S 10°

FIG. 3

FIG. 4

FIG. 7A

FIG. 7

FIG. 7B

FIG. 7C

SUN
WIND

2/3

0140500

0140500

FIG. 5

FIG. 6

FIG. 8

DRIVE CONTROL